Europäisches Patentamt

European Patent Office

Office européen des brevets

(11) Publication number: **0 401 511**

**A2**

## EUROPEAN PATENT APPLICATION

(21) Application number: **90108416.0**

(22) Date of filing: **04.05.90**

(51) Int. Cl.⁵: **B60K 17/14**

(30) Priority: **11.05.89 US 350669**

(43) Date of publication of application:
**12.12.90 Bulletin 90/50**

(84) Designated Contracting States:
**DE FR GB**

(71) Applicant: **DEERE & COMPANY**
**1 John Deere Road**
**Moline, Illinois 61265(US)**

(72) Inventor: **Love, Mahlon Lloyd**
**10 Pine Ridge Road, R.R. 4**
**Geneseo, Illinois 61254(US)**
Inventor: **Leemans, Daniel Louis**
**2806-18th St. Court**
**Moline, Illinois 61265(US)**

(74) Representative: **Feldmann, Bernhard et al**
**DEERE & COMPANY European Office Patent**
**Department Steubenstrasse 36-42**
**D-6800 Mannheim 1(DE)**

(54) **Arrangement of motor and gear box.**

(57) Eine Motor- und Getriebeanordnung mit einem
Planetenuntersetzungsgetriebe dient dem Einzel-
radantrieb. Motor und Getriebe sind in einem ein-
teiligen, rohrförmigen Gehäuse (12) angeordnet. In
die Innenwandung des Gehäuses (12) ist das Ring-
rad (64) des Planetengetriebes integriert. Die äußere
Wandung des Gehäuses (12) enthält Lagermittel (86,
88), die das durch den Planetengetriebeausgang an-
getriebene Teil (56) drehbar tragen.

## Motor- und Getriebeanordnung

Die Erfindung betrifft eine Motor- und Getriebeanordnung mit einem Planetenuntersetzungsgetriebe, welches wenigstens ein Sonnenrad, wenigstens einen Planetenradträger, wenigstens ein Ringrad und mehrere vom zugehörigen Planetenradträger getragene und mit dem Sonnenrad und dem Ringrad kämmende Planetenräder enthält. Dabei wird entweder ein Sonnenrad oder ein Planetenradträger von der Ausgangswelle des Motors angetrieben. Entweder ein Planetenradträger oder ein Sonnenrad dienen als Planetengetriebeausgang, mit dem ein angetriebenes Teil in Eingriff bringbar ist.

Gemäß dem Stand der Technik (zum Beispiel US-PS 4,359,914 oder US-PS 4,546,844) sind bei einer Motor- und Getriebeanordnung der eingangs genannten Art der Motor und das Getriebe in gesonderten Gehäusen untergebracht, welche durch Schweißen oder Verschrauben miteinander verbunden sind. Darüber hinaus besteht jedes der Getriebegehäuse aus mehreren Teilen, die miteinander verschraubt sind. Die große Gehäuseteilezahl erfordert hohe Herstellungskosten und führt zu Problemen mit den Toleranzen, die sich durch die Aneinanderreihung vieler Gehäuseteile aufsummieren.

Die mit der Erfindung zu lösende Aufgabe wird darin gesehen, eine gedrungene und einfache Motor- und Getriebeanordnung der eingangs genannten Art für ein Antriebsorgan anzugeben. Die Probleme der Aufaddierung von Toleranzen sollen vermieden werden.

Die Aufgabe wird erfindungsgemäß dadurch gelöst, daß ein einteiliges Gehäuse vorgesehen ist, welches durch eine Zwischenwand in eine den Motor aufnehmende Motorkammer und eine das Getriebe aufnehmende Getriebekammer unterteilt ist. Die Ausgangswelle des Motors erstreckt sich durch eine Öffnung in der Zwischenwand bis in die Getriebekammer hinein. Das Ringrad ist in die innere Oberfläche des Gehäuses integriert, insbesondere weist das Gehäuse eine entsprechende Innenverzahnung auf.

Hierdurch wird eine kompakte Motor-Getriebe-Einheit für ein Antriebselement bereit gestellt. Durch die einfache, einteilige Ausbildung des gemeinsamen Gehäuses läßt sich ein Aufsummieren von Toleranzfehlern vermeiden. Da das Ringrad in das Gehäuse integriert ist, entfällt ein entsprechendes gesondertes Bauteil.

Vorzugsweise ist das einteilige Gehäuse als ein im wesentlichen zylindrischer hohler Körper ausgebildet. Zur Abdichtung der Motorkammer ist diese mit einer am Gehäuse befestigten Abschlußkappe verschlossen.

Einer besonders bevorzugten Ausgestaltung der Erfindung zufolge ist wenigstens ein Teil des Getriebekammerendes des Gehäuses von dem angetriebenen Teil umgeben. Zwischen dem Gehäuse und dem angetriebenen Teil sind Lagerungen vorgesehen, so daß das angetriebene Teil auf dem Gehäuse drehbar gelagert ist.

Eine bevorzugte Anwendung der erfindungsgemäßen Motor- und Getriebeanordnung ist bei Einzelradantrieben von Motorfahrzeugen gegeben.

Um ein weiteres Bauteil einzusparen, schlägt eine zweckmäßige Weiterbildung der Erfindung vor, daß das in die Getriebekammer ragende Ende der Motorausgangswelle als Sonnenrad eines Planetengetriebes ausgebildet ist und als Planetengetriebeeingang dient. Ferner ist es vorteilhaft, das angetriebene Teil drehfest mit einem Planetenradträger des Planetengetriebes derart zu verbinden, daß der Planetenradträger durch das angetriebene Teil in seiner radialen und axialen Lage gehalten wird.

Einer weiteren bevorzugten Ausgestaltung der Erfindung zufolge ist das Planetengetriebe zweistufig ausgebildet und weist einen ersten und einen zweiten Planetengetriebesatz auf, von denen jeder ein Sonnenrad, ein Ringrad, einen Planetenradträger und mehrere Planetenräder umfaßt. Vorzugsweise ist in dem Gehäusemantel ein einziges Ringrad integriert, das als gemeinsames Ringrad sowohl für den ersten als auch für den zweiten Planetengetriebesatz dient. Das Ringrad ist zweckmäßigerweise durch eine in die innere Mantelfläche des Gehäuses eingefräste Verzahnung gebildet.

Weitere vorteilhafte Ausgestaltungen und Weiterbildungen der Erfindung gehen aus den Unteransprüchen hervor.

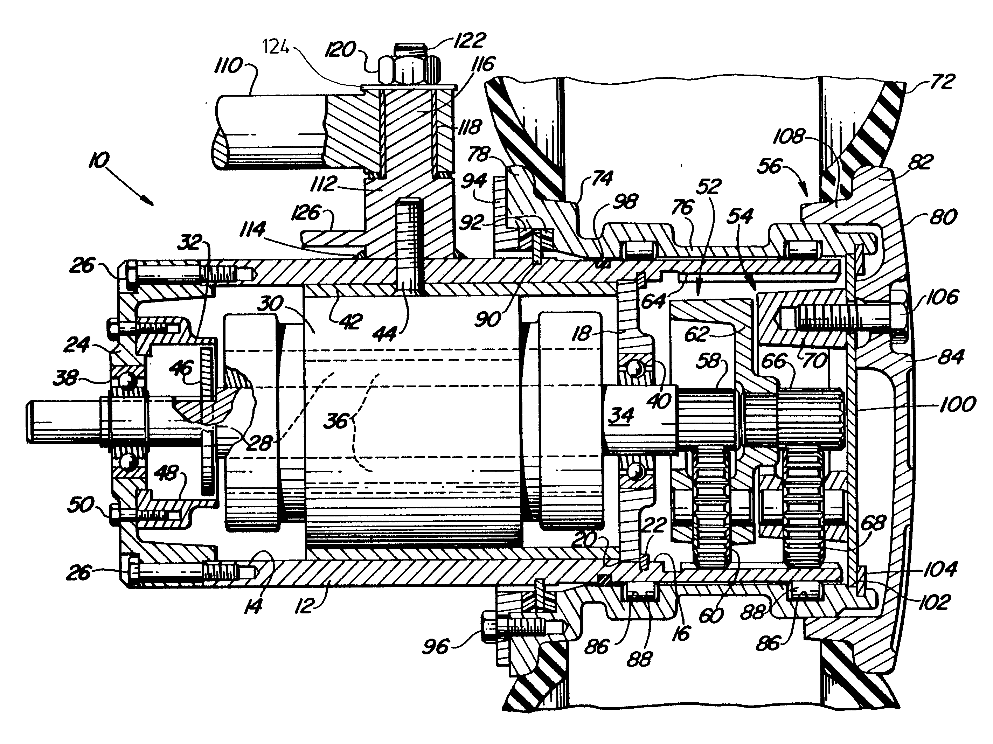

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Die einzige Figur stellt einen Schnitt durch eine Motor-und Getriebeanordnung für einen Radantrieb dar, welche die wesentlichen Merkmale der vorliegenden Erfindung enthält.

In der Zeichnung bezieht sich das Bezugszeichen 10 allgemein auf ein Teil, das einen Motor, ein Getriebe und einen Antrieb vereint. Dieses Teil ist als Radnabenanordnung entsprechend vorliegender Erfindung ausgebildet. Der Zusammenbau 10 gruppiert sich um ein rohrförmiges Gehäuse 12, welches durch eine ringförmige Zwischenwand 18 in eine Motorkammer 14 und eine Getriebekammer 16 unterteilt ist.

Die Zwischenwand 18 ist mit dem rohrförmigen Gehäuse 12 durch einen Schrupfsitz verbunden und wird gegen axiale Verschiebung durch eine Schulter 20, die auf der Innenfläche des rohrförmigen Gehäuses 12 angeformt ist, und einen Sprengring 22 gehalten. Die Motorkammer 14 ist durch eine Abschlußkappe 24 verschlossen, welche am Ende des rohrförmigen Gehäuses 12 mit diesem durch Schrauben 26 befestigt ist.

Ein elektronisch kommutierbarer Permanentmagnetmotor ist innerhalb der Motorkammer 14 beherbergt und umfaßt einen Rotor 28, einen Stator 30 und einen Lagesensor 32, der einen nicht dargestellten elektronischen Schaltkreis zur Erregung der entsprechenden Motorwindungen ansteuert. Der Rotor 28 besteht aus einer Welle und einer Vielzahl von Magnetpolen 36, die an der Welle 34 befestigt sind. Die Welle 34 wird drehbar von Lagern 38 und 40 getragen, die ihrerseits von der Abschlußkappe 24 bzw. der Zwischenwand 18 aufgenommen werden. Das Ende der Welle 34 erstreckt sich über das Lager 40 hinaus in die Getriebekammer 14 hinein. Das Lager 40 ist vorzugsweise ein abgedecktes Lager, daß die beiden Kammern gegeneinander abdichtet.

Der Stator 30 ist ein vielfach geschlitzter Stator, in dessen diskreten Schlitzen eine vielphasige Ankerwicklung angeordnet ist. Der Stator 30 ist drehfest in einer Hülse 42 gesichert, welche ihrerseits durch die Schraube 44 drehfest in dem Gehäuse 12 befestigt ist. Der Lagesensor 32 umfaßt eine auf der Welle 34 befestigte Scheibe 46 und ein ringförmiges Teil 48, welches durch Schrauben 50 an der Abschlußkappe 24 befestigt ist und sich rund um die Scheibe 46 erstreckt. Die Scheibe 46 trägt Magnete, welche die Lage der Welle 34 an Sensoren mitteilen, welche von dem ringförmigen Teil 48 getragen werden. Der Motor ist nicht im einzelnen dargestellt und beschrieben, da der jeweils verwendete Motortyp nicht Gegenstand der vorliegen den Erfindung ist. Bei dem Motor kann es sich beispielsweise um einen Elektromotor mit Bürsten oder auch um einen Hydraulikmotor handeln.

In der Getriebekammer 16 befindet sich ein erster und ein zweiter Planetengetriebesatz, die jeweils insgesamt mit den Bezugszeichen 52 und 54 versehen sind und die Antriebskraft von der Motorausgangswelle 34 zu einem angetriebenen Teil, welches insgesamt mit dem Bezugszeichen 56 versehen ist, übertragen. Der erste Planetengetriebesatz 52 enthält ein Sonnenrad 58, welches gemäß der bevorzugten Ausführungsform der Erfindung als Teil des Endes der Ausgangswelle 34 ausgebildet ist, die innerhalb der Getriebekammer 16 liegt. Der erste Planetengetriebesatz 52 enthält ferner mehrere Planetenräder 60, welche drehbar auf einem Planetenradträger 62 gelagert sind und sowohl mit dem Sonnenrad 58 als auch mit einem Ringrad 64 kämmen. Das Ringrad 64 ist als Bestandteil des Gehäuses 12 ausgebildet und besteht aus Zähnen, die in die Innenwandung des Gehäuses 12 eingefräst sind. Der Planetenradträger 62 des ersten Planetengetriebesatzes 52 trägt eine gezahnte Welle 66, welche das Sonnenrad des zweiten Planetengetriebesatzes 54 bildet, und treibt diese an. Der zweite Planetengetriebesatz 54 enthält ebenfalls mehrere Planetenräder 68, die drehbar auf einem Planetenradträger 70 gelagert sind und mit dem Sonnenrad 66 und dem Ringrad 64 kämmen. Das Ringrad 64 weist so lange Zähne auf, daß es für beide Planetengetriebesätze 52, 54 als Ringrad dient.

In der bevorzugten Ausgestaltung der Erfindung, wie sie in der Figur dargestellt ist, wird in jedem der Planetengetriebesätze das Sonnenrad als Eingang und der Planetenradträger als Ausgang verwendet, so daß eine Geschwindigkeitsabnahme erzielt wird. Es kann jedoch in Abhängigkeit vom Anwendungsfall wünschenswert sein, die Geschwindigkeit zu erhöhen. In diesen Fällen kann der Planetenradträger als Eingang und das Sonnenrad als Ausgang wirken.

In der bevorzugten Ausgestaltung der Erfindung nimmt das angetriebene Teil 56 die Form eines zweiteiligen Rades ein, welches einen teilweise dargestellten Reifen 72 trägt. Ein Teil des Rades 74 bildet die Radscheibe 76 und einen Bordrand 78 des Felgenkranzes. Die Radscheibe 76 bildet gleichzeitig die Radnabe. Der andere Teil 80 des zweiteiligen Rades bildet zum einen den zweiten Bordrand 82 des Felgenkranzes und zum anderen eine Radkappe 84. Die innere Oberfläche der Radscheibe 76 und der Radnabe ist mit einem Paar zueinander beabstandeter ringförmiger Nuten oder Lagerlaufflächen 86 versehen, welche mehrere Lagerrollen 88 aufnehmen. Die äußere Oberfläche des rohrförmigen Gehäuses 12 ist im Bereich der Getriebekammer 16 geschliffen und bildet Lagerlaufflächen, an der die Lagerrollen 88 angreifen, wenn das erste Teil 74 des Rades über dem rohrförmigen Gehäuse 12 angeordnet ist.

Das erste Teil 74 des Rades wird gegen axiale Verschiebung auf dem rohrförmigen Gehäuse 12 durch einen Sprengring 90 geschützt, welcher in eine Nut auf der äußeren Oberfläche des Gehäuses 12 eingreift. Der Sprengring 90 ist zwischen einem Paar Kunststoffringe 92 eingeschichtet. Die Kunststoffringe können aus einem beliebigen, geeigneten Kunststoff bestehen. Es wird ein abriebfestes Material mit geringer Reibung bevorzugt. Einer der Kunststoffringe 92 ist zwischen dem Sprengring 90 und einer Schulter des angetriebenen Teils 56 angeordnet, während der andere Kunststoffring 92 zwischen dem Sprengring 90 und einer ringförmigen Scheibe 94 liegt, die durch Kopfschrauben 96 mit dem Bordrand 78 verbunden ist. Eine geeignete Dichtung 98 wird durch eine Nut in der äußeren Wandung des rohrförmigen Gehäuses 12 aufgenommen und wirkt zwischen dem Gehäuse 12 und der Radnabe des angetriebenen Teils 56, um die Lager und Zahnräder vor Verunreinigungen zu schützen, welche sonst zwischen dem Gehäuse 12 und der Radnabe des angetriebenen Teils 56 eindringen könnten.

Ein Antriebsflansch 100 ist in das offene Ende des ersten Radteiles 74 auf der dem Bordrand 78 gegenüberliegenden Seite durch Preßsitz eingepaßt und wird in seiner axialen Lage durch eine an der inneren Oberfläche des ersten Radteiles 74 angeformte Schulter 102 und einen Sprengring 104, der in eine Nut in der inneren Oberfläche des ersten Radteiles 74 eingreift, gehalten. Das zweite Radteil 80 ist am Planetenradträger 70 des zweiten Planetengetriebesatzes 54 mittels mehrerer Kopfschrauben 106 befestigt. Die Kopfschrauben 106 erstrecken sich auch durch geeignete Ausnehmungen in dem Antriebsflansch, welcher zwischen dem zweiten Radteil 80 und dem Planetenradträger 70 eingespannt ist. Das zweite Radteil 80 enthält ferner einen ringförmigen Ansatz 108, welcher auf der Radscheibe 76 oder Radnabe des ersten Radteiles 74 festgeklemmt ist, wenn die Kopfschrauben 106 angezogen sind, um das zweite Radteil 80 gegen den Antriebsflansch 100 zu ziehen. Der Antriebsflansch 100 und das zweite Radteil 80 dienen dazu, die Lage des Planetenradträgers 70 des zweiten Planetengetriebesatzes 54 in Bezug auf das erste Radteil 74 festzulegen. Die Antriebskraft wird von dem Planetenradträger 70 des zweiten Planetengetriebesatzes 54 über die Kopfschrauben 106 unmittelbar auf das zweite Radteil 80 übertragen. Die Übertragung der Antriebskraft auf das erste Radteil 74 erfolgt durch Reibungseingriff zwischen dem Antriebsflansch 100 und dem ersten Radteil 74 und auch durch Reibungseingriff zwischen dem Ansatz 108 des zweiten Radteiles 80 und dem ersten Radteil 74. Falls erforderlich, kann eine zwangsläufigere Kraftübertragung zum ersten Radteil 74 durch geeignete Schrauben erreicht werden, die zwischen dem Antriebsflansch 100 und dem ersten Radteil 74 und/oder zwischen dem zweiten Radteil 80 und dem ersten Radteil 74 wirken.

Hierzu können auch andere Mittel, wie ineinandergreifende Zähne und Schlitze zwischen dem Antriebsflansch 100 und dem ersten Radteil 74, dienen. Soll das zweiteilige Rad mit einem schlauchlosen Reifen bestückt werden, so kann auch eine geeignete Dichtung zwischen dem Ansatz 108 des zweiten Radteiles 80 und der Oberfläche des ersten Radteiles 74 angeordnet werden.

Zum Zwecke der Befestigung der Anordnung aus Motor, Getriebe und Rad an der Achse 110 eines Fahrzeuges, ist ein Halter 112 steif an dem rohrförmigen Gehäuse 12 befestigt. Der Befestigungspunkt liegt dicht benachbart zum angetriebenen Teil 56, hat jedoch einen genügenden Abstand, um ein freies Laufen der Reifen zu ermöglichen. Der Halter 112 ist zunächst durch die Schraube 44 an dem Gehäuse 12 befestigt und dann mit diesem durch Schweißen 114 starr verbunden. Ein zentrischer Bereich 116 des Halters 112 erstreckt sich durch eine Buchse 118, die sich in einer Ausnehmung im Ende der Achse 110 befindet. Der Ansatz 112 wird in der Buchse 118 durch eine Mutter 120 gehalten, die auf ein oberes Gewindeende 122 des Halters 112 aufgeschraubt ist. Die Mutter 120 drückt gegen eine Unterlegscheibe 124, welche auf dem äußeren Ende der Achse 110 aufliegt. Der Halter 112 enthält ferner einen Lenkarm, der teilweise bei 126 dargestellt ist.

Aus der vorstehenden Beschreibung einer bevorzugten Ausführungsform der Erfindung geht hervor, daß die Verwendung eines einstückigen rohrförmigen Gehäuses mehrere Funktionen wahrnimmt. Das Gehäuse nimmt sowohl den Motor als auch das Getriebe auf, es dient als Ringrad für beide Planetengetriebesätze, es dient ferner unmittelbar als Befestigung für das Antriebsteil und einer Befestigung am Ende der Achse 110. Diese mehreren Aufgaben dienende Verwendung eines einteiliges Gehäuses liefert eine sehr gedrungene Anordnung, welche relativ leicht und kosten günstig herstellbar ist und jegliche Probleme sich aufaddierender Toleranzen, die oft bei vielfach zusammengesetzten Teilen auftreten, vermeidet.

Auch wenn die Erfindung lediglich an Hand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

## Claims

1. Motor- und Getriebeanordnung mit einem Planetenuntersetzungsgetriebe, welches wenigstens ein Sonnenrad (58, 66), wenigstens einen Planetenradträger (62, 70), wenigstens ein Ringrad (64) und mehrere vom zugehörigen Planetenradträger (62, 70) getragene und mit dem Sonnenrad (58, 66) und dem Ringrad (64) kämmende Planetenräder (60, 68) enthält, wobei entweder ein Sonnenrad (58, 66) oder ein Planetenradträger (62, 70) von der Ausgangswelle (34) des Motors angetrieben wird und den Planetengetriebeeingang bildet und entweder ein Planetenradträger (62, 70) oder ein Sonnenrad (58, 66) als Planetengetriebeausgang dienen, mit dem ein angetriebenes Teil (56) in Eingriff bringbar ist, dadurch gekennzeichnet, daß ein einteiliges Gehäuse (12) vorgesehen ist, welches durch eine Zwischenwand (18) in eine den Motor aufnehmende Motorkammer (14) und eine das Getriebe aufnehmende Getriebekammer (16) unterteilt ist, daß die Ausgangswelle (34) des Motors sich durch eine Öffnung der Zwischenwand (18) in die Getriebekammer (16) erstreckt, und daß das Ringrad (64) als integriertes Teil der inneren Oberfläche des Gehäuses (12) ausgebildet ist.

2. Anordnung nach Anspruch 1, dadurch gekennzeichnet, daß das einteilige Gehäuse (12) durch einen im wesentlichen zylindrischen hohlen Körper gebildet wird, dessen Inneres durch die Zwischenwand (18) in zwei axial hintereinander liegende Kammern (14, 16) unterteilt ist.

3. Anordnung nach Anspruch 1 oder 2, dadurch gekennzeichnet, daß die Motorkammer (14) durch eine am Gehäuse (12) befestigbare Abschlußkappe (24) geschlossen ist.

4. Anordnung nach einem der Ansprüche 1 bis 3, dadurch gekennzeichnet, daß eine zentrale Öffnung in der Zwischenwand (18) eine erste Lagerung (40) für die Motorausgangswelle (34) enthält.

5. Anordnung nach Anspruch 3 oder 4, dadurch gekennzeichnet, daß die Abschlußkappe (24) eine zweite Lagerung (38) für die Motorausgangswelle (34) enthält.

6. Anordnung nach einem der Ansprüche 1 bis 5, dadurch gekennzeichnet, daß das angetriebene Teil (56) wenigstens einen Teil des Getriebekammerendes des Gehäuses (12) einschließt.

7. Anordnung nach Anspruch 6, dadurch gekennzeichnet, daß zwischen dem angetriebenem Teil (56) und dem Gehäuse (12) Lagermittel (86, 88) enthalten sind, durch die das angetriebene Teil (56) auf dem Gehäuse (12) drehbar gelagert ist.

8. Anordnung nach Anspruch 7, dadurch gekennzeichnet, daß der Bereich des angetriebenen Teils (56), der das Getriebekammerende des Gehäuses (12) einschließt, wenigstens zwei zueinander beabstandete, ringförmige und als äußere Lagerlaufflächen (86) ausgebildete Nuten zur Aufnahme von Rollenlagern (88) aufweist, und daß wenigstens ein Teil der äußeren Oberfläche des Getriebekammerendes des Gehäuses (12) glatt und kreisringförmig ausgebildet ist und die innere Lagerlauffläche für die Rollenlager (88) bildet.

9. Anordnung nach einem der Ansprüche 6 bis 8, dadurch gekennzeichnet, daß Mittel (90, 92, 94) vorgesehen sind, um eine axiale Verschiebung des angetriebenen Teils (56) auf dem Getriebekammerende des Gehäuses (12) zu verhindern.

10. Anordnung nach einem der Ansprüche 1 bis 9, dadurch gekennzeichnet, daß das in die Getriebekammer (16) ragende Ende der Motorausgangswelle (34) als Sonnenrad eines Planetengetriebes ausgebildet ist und als Planetengetriebeeingang dient.

11. Anordnung nach einem der Ansprüche 1 bis 10, dadurch gekennzeichnet, daß das angetriebene Teil (56) drehfest mit einem Planetenradträger (70) des Planetengetriebes verbunden ist.

12. Anordnung nach Anspruch 11, dadurch gekennzeichnet, daß der Planetenradträger (70) fest mit dem angetriebenen Teil (56) verbunden ist und durch dieses in seiner radialen und axialen Lage gehalten wird.

13. Anordnung nach einem der Ansprüche 1 bis 12, dadurch gekennzeichnet, daß das in der Getriebekammer (16) angeordnete Planetengetriebe zweistufig ausgebildet ist und einen ersten und einen zweiten Planetengetriebesatz (52, 54) aufweist, von denen jeder ein Sonnenrad (58, 66), ein Ringrad (64), einen Planetenradträger (62, 70) und mehrere Planetenräder (60, 68) umfaßt.

14. Anordnung nach Anspruch 13, dadurch gekennzeichnet, daß der erste und zweite Planetengetriebesatz (52, 54) ein gemeinsames Ringrad (64) aufweisen, das durch eine in die innere Mantelfläche des Gehäuses (12) eingefräste Verzahnung gebildet ist.

15. Anordnung nach Anspruch 13 oder 14, dadurch gekennzeichnet, daß das Sonnenrad (58) des ersten Planetengetriebesatzes (52) mit der Motorausgangswelle (34) verbunden ist und den Eingang für den ersten Planetengetriebesatz (52) bildet, daß das Sonnenrad (66) des zweiten Planetengetriebesatzes (54) am Planetenradträger (62) des ersten Planetengetriebesatzes (52) befestigt ist und den Eingang für den zweiten Planetengetriebesatz (54) bildet und daß der Planetenradträger (70) des zweiten Planetengetriebesatzes (54) den Getriebeausgang bildet.

16. Anordnung nach Anspruch 13 oder 14, dadurch gekennzeichnet, daß der Planetenradträger des ersten Planetengetriebesatzes mit der Motorausgangswelle verbunden ist und den Eingang für den ersten Planetengetriebesatz bildet, daß der Planetenradträger des zweiten Planetengetriebesatzes am Sonnenrad des ersten Planetengetriebesatzes befestigt ist und den Eingang für den zweiten Planetengetriebesatz bildet und daß das Sonnenrad des zweiten Planetengetriebesatzes den Getriebeausgang bildet.